# EUROPÄISCHE PATENTSCHRIFT

(11) **EP 3 366 490 B1**
(45) Veröffentlichungstag und Bekanntmachung des Hinweises auf die Patenterteilung: **05.05.2021**
(21) Anmeldenummer: 18153395.1
(22) Anmeldetag: 25.01.2018
(51) Int. Cl.: B60B 33/00

(54) **LENKROLLE FÜR INSBESONDERE TRANSPORTGERÄTE**
SWIVELLING WHEEL FOR IN PARTICULAR TRANSPORT DEVICES
ROULEAU DE DIRECTION, EN PARTICULIER POUR UN APPAREIL DE TRANSPORT

(30) Priorität: 31.01.2017 DE 202017100498 U
(43) Veröffentlichungstag der Anmeldung: 29.08.2018
(73) Patentinhaber: Tente GmbH & Co. KG, 42929 Wermelskirchen (DE)
(72) Erfinder: Block, Michael, 42929 Wermelskirchen (DE); Hartkopf, Horst, 51381 Leverkusen (DE); Gerhard, Peter, 51381 Leverkusen (DE)
(74) Vertreter: Müller, Enno

(56) Entgegenhaltungen:
- EP-A1- 0 913 273
- CH-A5- 607 958
- DE-A1- 3 136 203
- DE-A1-102004 035 220
- DE-U1-202010 012 904
- FR-A1- 3 001 659
- GB-A- 971 199

## Beschreibung

### Gebiet der Technik

Die Erfindung betrifft eine Lenkrolle nach den Merkmalen des Oberbegriffes des Anspruches 1.

### Stand der Technik

Lenkrollen der in Rede stehenden Art sind bekannt. Diese finden beispielsweise Verwendung an Transportwagen, wobei in üblicher Nutzungsstellung die Drehachse, um welche die Gabel relativ zu dem feststehenden Halteteil drehbar ist, vertikal ausgerichtet ist. Hierbei ist zufolge Zusammenwirkung von Vorspannteil und Ausrichtungsvorsprung eine Vorzugsausrichtung der Lenkrolle, insbesondere der Gabel relativ zu dem feststehenden Halteteil gegeben. Bekannt sind diesbezüglich Ausbildungen, bei welchen nur eine Vorzugs-Drehstellung vorhanden ist. Bekannt sind diesbezüglich auch Lösungen mit beispielsweise zwei Vorzugs-Drehstellungen, insbesondere solche, die mit Bezug zu der Drehachse um 180 Grad zueinander versetzt sind.

Bekannt ist eine solche Lenkrolle beispielsweise aus der DE 196 53 246 A1, wie auch weiter beispielsweise aus der US 4212093 A.

Aus der DE 20 2010 012 904 U1 ist eine Lenkrolle mit einem Vorspannteil und einem Ausrichtungsvorsprung bekannt, bei welchem das Vorspannteil auf zwei in einer Ebene senkrecht zu der Drehachse der Lenkrolle distanziert parallel zueinander verlaufenden Bolzen angeordnet ist, wozu das eine Vorspannteil mit jeweils einer Druckfeder auf jedem der Bolzen beaufschlagt ist. In einer Ansicht, in welcher die Drehachse der Laufrolle sich punktförmig abbildet, ist der Ausrichtungsvorsprung zwischen den Bolzen angeordnet.

### Zusammenfassung der Erfindung

Ausgehend von dem dargelegten Stand der Technik beschäftigt sich die Erfindung mit der Aufgabenstellung, eine Lenkrolle der genannten Art anzugeben, die möglichst zuverlässig und/ oder einfach aufgebaut ist.

Diese Aufgabe ist beim Gegenstand des Anspruches 1 gelöst, worauf darauf abgestellt ist, dass auf dem einen Bolzen ein oder zwei Vorspannteile verschiebbar angeordnet sind, die im Falle von zwei Vorspannteilen jeweils über eine Zylinderdruckfeder in Richtung auf die zentrale Drehachse federbelastet sind und dass jedes Vorspannteil unabhängig von der Drehstellung der Gabel relativ zu dem Halteteil stets zumindest an einem Ausrichtungsvorsprung anliegt und dass bei einer Ausführung mit nur einem Vorspannteil und einem Ausrichtungsvorsprung die Zapfenlängsachse eines Ausrichtungsvorsprunges die Bolzenlängsachse des das Vorspannteil tragenden Bolzens in einer bevorzugten und definierten Drehgrundausrichtung der Gabel schneidet.

Die Vorspannkraft kann, bezogen auf eine Projektion, in der sich die Drehachse als Linie abzeichnet, im Wesentlichen senkrecht zu der Drehachse verlaufen, wobei auch eine winkelmäßige Abweichung zu einer strikt senkrechten Ausrichtung relativ zu der Drehachse von wenigen Winkelgraden gegeben sein kann, so bspw. bis hin zu etwa 10 oder etwa 15 Grad, gegebenenfalls bis hin zu etwa 30 Grad, weiter auch gegebenenfalls nur etwa 1 bis etwa 5 Grad.

Die Vorspannkraft kann gleichgerichtet zu einer Laufrad-Drehachse, insbesondere raumparallel hierzu versetzt wirken. So kann die Vorspannkraft bei üblicher Ausrichtung der Lenkrolle in Nutzungsstellung in Horizontalrichtung wirken.

Das Vorspannteil kann, wie bevorzugt, in steter Anlage an dem Ausrichtungsvorsprung sein, dies unter Einwirkung der Vorspannkraft.

In einer möglichen Ausgestaltung ist das Vorspannteil an der Gabel gehaltert und der Ausrichtungsvorsprung an dem feststehenden Halteteil. Alternativ besteht auch die Möglichkeit, das Vorspannteil an dem feststehenden Halteteil und den Ausrichtungsvorsprung an der Gabel anzuordnen.

Das Vorspannteil wirkt zur Drehbewegung der Gabel in eine Vorzugs-Drehstellung im Wesentlichen exzentrisch auf den Ausrichtungsvorsprung ein, dies gegebenenfalls mit einer Ausnahme in jedenfalls einer Drehstellung der Gabel relativ zu der Halteplatte. Diese eine Drehstellung kann eine Vorzugs-Drehstellung (definierte Drehausrichtungsstellung) sein, in der eine im Wesentlichen zentrische Einwirkung des Vorspannteils auf den Ausrichtungsvorsprung gegeben sein kann.

Die die Vorspannkraft im Wesentlichen erbringende Feder übt bevorzugt eine Druckkraft auf den Ausrichtungsvorsprung aus, gegebenenfalls, wie auch bevorzugt, über das Vorspannteil.

Die Feder kann auf einem beispielsweise an der Gabel gehalterten Bolzen geführt sein. So kann die Feder eine von dem Bolzen zentral durchsetzte Zylinderfeder, insbesondere Zylinderdruckfeder, sein. Der Bolzen gibt hierbei neben der Führung auch die Wirkrichtung der Feder vor.

In einer möglichen Ausgestaltung ist auch das über die Feder gegebenenfalls vorgespannte Vorspannteil auf dem Boden geführt.

Die Führung der Feder und gegebenenfalls das Vorspannteils auf einem Bolzen erweist sich als funktionssicher und darüber hinaus auch als montagefreundlich.

Weitere Merkmale der Erfindung sind nachstehend, auch in der Figurenbeschreibung, oftmals in ihrer bevorzugten Zuordnung zum Gegenstand des Anspruches 1 oder zu Merkmalen weiterer Ansprüche erläutert. Sie können aber auch in einer Zuordnung zu nur einzelnen Merkmalen des Anspruches 1 oder des jeweiligen weiteren Anspruches oder jeweils unabhängig von Bedeutung sein.

So können zwei Vorspannteile und/oder zwei Ausrichtungsvorsprünge vorgesehen sein. Sind sowohl zwei Vorspannteile als auch zwei Ausrichtungsvorsprünge vorgesehen, so wirkt in einer möglichen Ausgestaltung jedes Vorspannteil gegen einen der Ausrichtungsvorsprünge. Auch können beide Vorspannteile zumindest in einer Drehausrichtung der Gabel relativ zu dem feststehenden Halteteil zugleich mit beiden Ausrichtungsvorsprüngen zusammenwirken, dies weiter insbesondere, wie auch bevorzugt, in der bevorzugten Drehausrichtungsstellung.

Das unter steter Vorspannung stehende Vorspannteil ist in Entspannungsrichtung des die Vorspannung aufbauenden Elementes belastet. Zufolge der weiter bevorzugt steten Abstützung des Vorspannteils an dem Ausrichtungsvorsprung und der weiter bevorzugten exzentrischen Anordnung des Ausrichtungsvorsprunges ist dieser über das Vorspannteil belastet. Über das Vorspannteil wird der Ausrichtungsvorsprung in eine Stellung belastet und gegebenenfalls drehverlagert, in welcher eine Maximalentlastung der Vorspannung auf das Vorspannteil erreicht ist. Diese Drehstellung entspricht einer bevorzugten Drehausrichtungsstellung der Gabel relativ zu dem feststehenden Halteteil. Es ist hierdurch weiter eine definierte Drehausrichtungsstellung erreichbar.

Insbesondere in Abhängigkeit von der Anzahl der Ausrichtungsvorsprünge und/oder der Vorspannteile können nur eine definierte Drehausrichtungsstellung oder auch mehrere, so beispielsweise zwei um 180 Grad versetzte Drehausrichtungsstellungen gegeben sein.

Sind zwei Ausrichtungsvorsprünge vorgesehen, so kann die Einwirkung des einen oder der beiden Vorspannteile auf die Ausrichtungsvorsprünge mit Ausnahme von zwei Drehstellungen der Gabel zu der Drehachse exzentrisch sein. Diese beiden Drehstellungen, in denen das Vorspannteil im Wesentlichen zentrisch einwirkt, können, wie bevorzugt, in Drehrichtung um 180 Grad zueinander versetzt sein. Auch können diese Drehstellungen in Drehrichtung der Gabel jeweils um etwa 90 Grad versetzt sein zu einer definierten Drehausrichtungsstellung (Vorzugs-Drehstellung).

In einer möglichen Ausgestaltung sind nur ein Vorspannteil und auch nur ein Ausrichtungsvorsprung vorgesehen. Bei einer solchen Anordnung ist bevorzugt nur eine definierte Drehausrichtungsstellung der Gabel relativ zu dem Halteteil gegeben.

Der Ausrichtungsvorsprung kann einen um eine Zapfenlängsachse drehbaren Ring aufweisen, wobei eine Ringaußenfläche mit dem Vorspannteil zusammenwirkt. Hierdurch kann eine reibungsarme Zusammenwirkung von Ausrichtungsvorsprung und Vorspannteil gegeben sein. Die Zapfenlängsachse erstreckt sich bevorzugt in paralleler Ausrichtung zu der Drehachse der Gabel.

Die Gabel kann von einem quer zu der Drehachse verlaufenden Bolzen durchsetzt sein, auf welchem das Vorspannteil in Richtung der Bolzenlängsachse verschiebbar angeordnet ist. Weiter kann ein solcher Bolzen so angeordnet sein, dass bei einer Drehung der Gabel relativ zu dem feststehenden Halteteil der Bolzen den Ausrichtungsvorsprung mit Bezug auf eine Ansicht in eine quer zur Drehachse verlaufenden Ebene störungsfrei kreuzen kann.

Bevorzugt ist das Vorspannteil entgegen einer zugleich den Bolzen umgebenden Feder verschiebbar auf dem Bolzen angeordnet. Es kann diesbezüglich eine Zylinderdruckfeder angeordnet sein, die einerends das Vorspannteil belastet und anderenends sich an einem Gabelabschnitt abstützt. Auch kann die Federkraft (Vorspannkraft) unmittelbar aus dem Vorspannteil resultieren, beispielsweise durch eine entsprechende Materialwahl des Vorspannteils oder eines Abschnittes davon. So kann beispielsweise ein Abschnitt des Vorspannteils aus einem elastisch rückstellfähigen Material gebildet sein.

Das Vorspannteil kann auf dem Bolzen verlagerbar und stets zwischen zumindest einem Ausrichtungsvorsprung und der die Vorspannkraft aufbauenden Feder eingespannt sein.

Das Vorspannteil kann ein Hartkunststoffteil sein, beispielsweise hergestellt im Kunststoff-Spritzverfahren. Auch kann diesbezüglich ein Metallteil vorgesehen sein, weiter auch ein Metallteil, welches beispielsweise kunststoffumspritzt ist.

Der Ausrichtungsvorsprung kann gemäß einer bevorzugten Ausgestaltung ein Metallteil sein. Dies trifft bevorzugt auch zu auf einen gegebenenfalls vorgesehenen drehbaren Ring, gegen welchen das Vorspannteil tritt. Auch kann insbesondere der vorbezeichnete Ring aus einem Kunststoffmaterial, beispielsweise Hartkunststoffmaterial gefertigt sein.

In einer Ausgestaltung, die auch bevorzugt sein kann, kann das Vorspannteil nur, entsprechend bevorzugt ausschließlich, zur Übertragung einer Druckkraft auf den Ausrichtungsvorsprung ausgelegt sein.

### Kurze Beschreibung der Zeichnungen

Nachstehend ist die Erfindung anhand der beigefügten Zeichnung, die aber lediglich Ausführungsbeispiele darstellt, näher erläutert. Ein Teil, das nur bezogen auf eines der Ausführungsbeispiele erläutert ist und bei einem weiteren Ausführungsbeispiel aufgrund der dort herausgestellten Besonderheiten nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: eine Lenkrolle der in Rede stehenden Art in perspektivischer Darstellung;
- Fig. 2: die Rolle gemäß Figur 1 in Unteransicht, betreffend eine erste Ausführungsform in einer definierten Drehausrichtung der mit dem Laufrad versehenen Gabel, bei strichpunktierter Darstellung des Laufrades;
- Fig. 3: den Schnitt gemäß der Linie III - III in Figur 2;
- Fig. 4: eine der Figur 2 entsprechende Darstellung, eine Drehzwischenstellung der Gabel und des Laufrads relativ zu einem feststehenden Halteteil betreffend;
- Fig. 5: eine der Figur 2 entsprechende Darstellung, betreffend eine zweite Ausführungsform;
- Fig. 6: den Schnitt gemäß der Linie VI - VI in Figur 5;
- Fig. 7: eine der Figur 4 entsprechende Darstellung, jedoch die Ausführungsform gemäß Figur 5 betreffend;
- Fig. 8: eine Ansicht gemäß Figur 5, eine zweite definierte Drehausrichtungsstellung von Gabel und Laufrad betreffend;
- Fig. 9: eine der Fig. 6 entsprechende Darstellung, betreffend eine alternative Ausgestaltung

### Beschreibung der Ausführungsformen

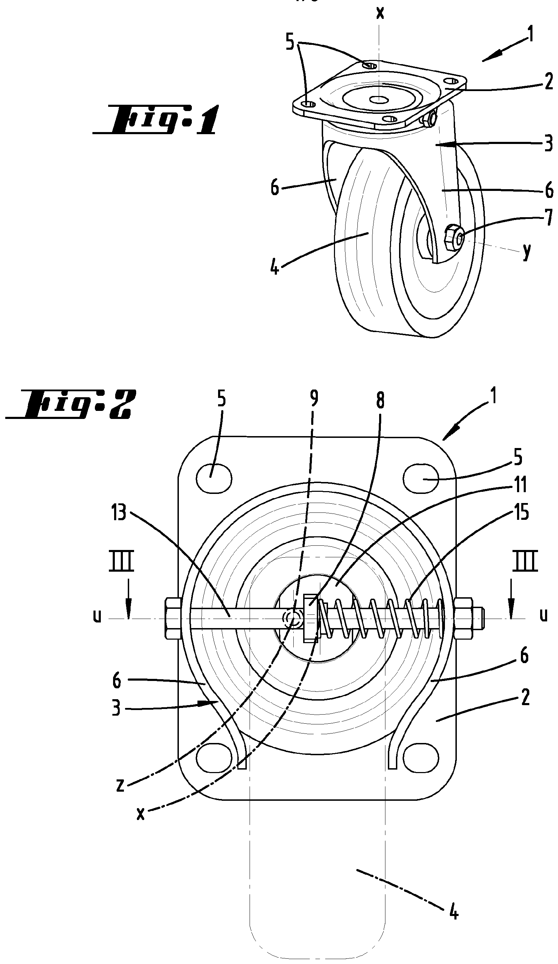

Dargestellt und beschrieben ist, zunächst mit Bezug zu Figur 1, eine Lenkrolle 1, mit einem feststehenden, plattenartigen Halteteil 2 und einem in einer Gabel 3 drehbar gehalterten Laufrad 4.

In üblicher Nutzungsstellung ist das plattenartige Halteteil 2 horizontal ausgerichtet. Über dieses Halteteil 2 wird die Lenkrolle 1 insgesamt unterseitig beispielsweise eines Transportgerätes, weiter beispielsweise eines Paletten-Transportwagens, angeschlagen. Hierzu sind in dem im Grundriss beispielsweise gemäß der Darstellung in Figur 2 langrechteckig gestalteten Halteteil 2 in den Eckbereich Langlöcher 5 vorgesehen, zum Durchtritt üblicher Befestigungselemente, wie beispielsweise Schrauben.

An dem Halteteil 2 ist die Gabel 3 und hierüber auch das Laufrad 4 um eine im üblichen Nutzungsbetrieb vertikale Drehachse x vollständig um diese Drehachse x drehbar gehaltert. In bekannter und auch bevorzugter Ausgestaltung kann zur reibungsarmen Drehbarkeit der Gabel 3 relativ zu dem Halteteil 2 ein Rollenlager oder dergleichen vorgesehen sein.

Bezüglich des grundsätzlichen Aufbaus der Lenkrolle 1 wird auch auf die eingangs erwähnte DE 196 53 246 A1 Bezug genommen. Der Inhalt dieser Patentanmeldung wird hiermit vollinhaltlich in die Offenbarung vorliegender Erfindung mit einbezogen, auch zu dem Zweck, Merkmale dieser Patentanmeldung in Ansprüche vorliegender Erfindung miteinzubeziehen.

Zwischen den im Nutzungsbetrieb im Wesentlichen sich entlang einer Vertikalen erstreckenden Gabelschenkeln 6 ist das Laufrad 4 um eine in den Gabelschenkeln 6 gelagerte Achse 7 frei drehbar gehaltert. Die diesbezügliche geometrische Achse ist mit y bezeichnet und erstreckt sich in einer quer zu der Drehachse x ausgerichteten Ebene.

Es ist so insgesamt eine Schwenkrolle gegeben.

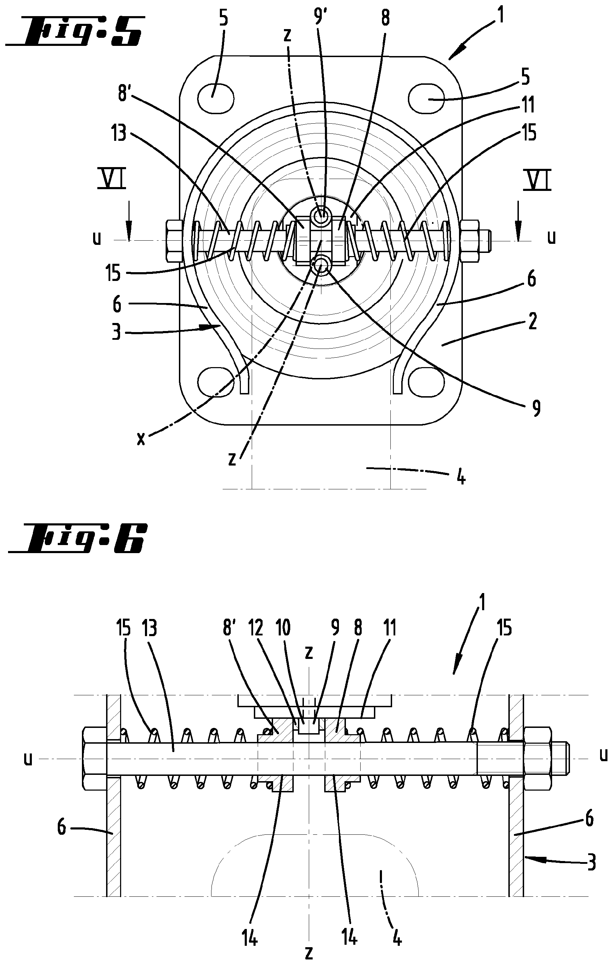

Es ist zumindest eine bevorzugte Drehausrichtungsstellung des Laufrades 4 vorgegeben. In den dargestellten Ausführungsbeispielen ist dies mit Bezug auf eine Grundrissdarstellung beispielsweise in den Figuren 2 und 5 gezeigt. Die geometrische Achse y der Laufradachse verläuft in der dargestellten bevorzugten Drehausrichtungsstellung beispielsweise parallel zu der kürzeren Randkante des langgestreckt rechteckigen Halteteils 2 (vgl. beispielsweise Figur 2).

Diese definierte Drehgrundausrichtung ist zufolge Krafteinwirkung im Zuge der Handhabung des mit der Lenkrolle 1 versehenen Transportgerätes aufhebbar. So kann beispielsweise das Rangieren des Transportgerätes zufolge des nach Überwindung der die Drehgrundausrichtung haltenden Kraft um die Drehachse x frei drehbaren Laufrades 4 relativ zu der Halteplatte 2 vereinfacht sein. In der definierten Drehgrundausrichtung ist insbesondere die Geradeausfahrt des Transportgerätes vereinfacht.

Die vorgegebene Drehgrundausrichtung ist erreicht zufolge Zusammenwirkung eines Vorspannteils 8 und eines Ausrichtungsvorsprungs 9.

In den dargestellten Ausführungsbeispielen ist das Vorspannteil 8 bzw. sind die Vorspannteile 8, 8' an der relativ zu dem Halteteil 2 drehbaren Gabel 3 gehaltert, während der Ausrichtungsvorsprung 9 bzw. die Ausrichtungsvorsprünge 9 und 9' an dem relativ zu der Gabel 3 feststehenden Halteteil 2 befestigt sind.

Jeder Ausrichtungsvorsprung 9 bzw. 9' ist in Form eines Zapfens 10 ausgebildet, mit einer Zapfenlängsachse z, welche sich in paralleler Ausrichtung zu der Drehachse x erstreckt.

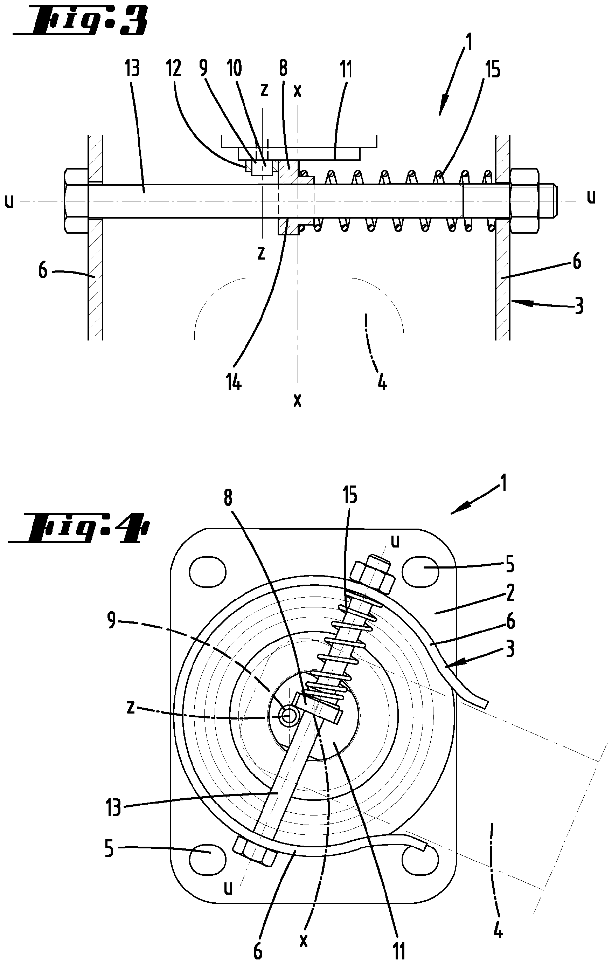

Wie ersichtlich ist bei Anordnung nur eines Ausrichtungsvorsprunges 9 gemäß der ersten Ausführungsform (Figuren 1 bis 4) der Ausrichtungsvorsprung 9 exzentrisch zu der Drehachse x angeordnet, dies beispielsweise, wie auch dargestellt, im Bereich einer das Halteteil 2 mit der Gabel 3 im Wesentlichen verbindenden Achszapfen überdeckenden Stirnplatte 11. Der Zapfen 10 kann mit der Stirnplatte 11 bzw. mit einem mit der Stirnplatte 11 drehfest verbundenen Abschnitt schraubverbunden sein (vgl. beispielsweise Figur 3).

Der zur Zusammenwirkung mit dem Vorspannteil 8 bzw. 8' über die Oberfläche der Stirnplatte 11 frei abragende Abschnitt des Zapfens 10 weist außenseitig einen relativ zu dem Zapfen 10 um die Zapfenlängsachse z frei drehbaren Ring 12 auf. Die Ringaußenfläche dient zur Zusammenwirkung mit dem Vorspannteil 8.

Der Ausrichtungsvorsprung 9 bzw. 9', insbesondere der Zapfen 10 und/oder der Ring 12 kann bzw. können als Metallteil(e) hergestellt sein.

Das Vorspannteil 8 bzw. 8' ist als plattenförmiges, beispielsweise Hartkunststoffteil hergestellt. Dieses ist auf einem Bolzen 13 schiebeverlagerbar. Hierzu weist das Vorspannteil 8 bzw. 8' eine dem Bolzenquerschnitt angepasste Bohrung 14 auf.

Der Bolzen 13 erstreckt sich mit seiner geometrischen Bolzenlängsachse u bevorzugt in paralleler Ausrichtung zur Laufradachse y, wobei der Bolzen 13 jeweils endseitig in den Gabelschenkeln 6 gehaltert und an diesen befestigt sein kann.

Das Vorspannteil 8 bzw. 8' kann, wie auch dargestellt, eine der Stirnplatte 11 zugewandte Stirnfläche aufweisen, über welche sich das Vorspannteil 8, 8' gegebenenfalls auf der zugewandten Oberfläche der Stirnplatte 11 abstützen kann, dies bei freier Schiebebewegbarkeit des Vorspannteils 8, 8' auf dem Bolzen 13.

Das Vorspannteil 8, 8' tritt mit einer bevorzugt senkrecht zur Schiebeverlagerungsrichtung des Vorspannteiles 8, 8' ausgerichteten Fläche gegen den Ausrichtungsvorsprung 9, 9'. Das Vorspannteil 8, 8' ist in steter Anlage zu dem Ausrichtungsvorsprung 9, 9' bzw. zu dessen Ring 12. Diese stete Anlage ist gegeben zufolge einer Vorspannkraft, welche in den Ausführungsbeispielen erreicht ist durch eine Feder 15, hier in Form einer Zylinderdruckfeder, welche den Bolzen 13 umfassend sich einerends wandungsinnenseitig eines Gabelschenkels 6 abstützt und anderendig auf das Vorspannteil 8, 8' einwirkt, zur Belastung des Vorspannteils 8, 8' in Richtung auf den Ausrichtungsvorsprung 9, 9'. Die Feder 15 dient zur Übertragung einer Druckkraft auf das Vorspannteil 8, 8'.

In der in den Figuren 5 bis 8 dargestellten zweiten Ausführungsform sind auf dem Bolzen 13 zwei Vorspannteile 8, 8' verschiebbar angeordnet, die jeweils über eine Zylinderdruckfeder 15 in Richtung auf die zentrale Drehachse x federbelastet sind. Jedes Vorspannteil 8, 8' liegt unabhängig von der Drehstellung der Gabel 3 relativ zum Halteteil 2 stets zumindest an einem Ausrichtungsvorsprung 9, 9' an. In dieser zweiten Ausführungsform sind entsprechend zwei Ausrichtungsvorsprünge 9 und 9' vorgesehen. Auch diese sind jeweils exzentrisch zu der Drehachse x angeordnet, bevorzugt mit Bezug zu der Drehachse x in diametraler Gegenüberlage und gleichmäßig radial zu der Drehachse x beabstandet.

Der Bolzen kann, wie in den Fig. 5 bis 8 dargestellt, durchlaufende sein, entsprechend beide Vorspannteile 8 und 8' tragend. Auch sind in diesem Fall beide Federn 15 auf diesem einen Bolzen 13 geführt.

Alternativ können aber auch zwei Bolzen 13 vorgesehen sein, die jeweils auf dem Gabelschenkel 6 gehaltert sind und frei in den Gabelraum einragen, hierbei die Drehachse x nicht schneidend. Auf jedem Bolzen 13 ist ein Vorspannteil 8 bzw. 8' mit der zugehörigen Feder 15 geführt.

Alternativ zu der gezeigten Verschraubung kann der Bolzen 13 auch beispielsweise an dem Gabelschenkel angeschweißt sein.

Auch kann es sich bei dem Bolzen 13 beispielsweise um einen teleskopierbaren Bolzen handeln, bei welchem ein Teleskopteil an dem Gabelschenkel befestigt ist und das andere Teleskopteil das Vorspannteil 8 bzw. 8' haltert.

Zufolge des unter Vorspannung an dem Ausrichtungsvorsprung 9 bzw. 9' anliegenden Vorspannteils 8 bzw. 8' wird die das Laufrad 4 tragende Gabel 3 stets in die bevorzugte und definierte Drehgrundausrichtung gedrängt. Dies ist die Stellung, in welcher im üblichen Nutzungszustand der Lenkrolle eine maximal mögliche Entspannung der auf den Ausrichtungsvorsprung 9, 9' einwirkenden Zylinderdruckfeder 15 erreicht ist.

In dieser Stellung schneidet die Zapfenlängsachse z des einen Ausrichtungsvorsprunges 9 bei einer Ausgestaltung mit nur einem Vorspannteil 8 und nur einem Ausrichtungsvorsprung 9 gemäß der ersten Ausführungsform die geometrische Bolzenlängsachse u des das Vorspannteil 8 tragenden Bolzens 13.

Aus dieser ausgerichteten Drehgrundstellung heraus wird bei einer Drehung der Gabel 3 relativ zu dem Halteteil 2 das Vorspannteil 8 unter Beibehaltung der Anlage an dem Ausrichtungsvorsprung 9 entgegen der Kraft der Zylinderdruckfeder 15 verlagert. Die Zylinderdruckfeder 15 wird entsprechend weiter vorgespannt.

Die relative Verdrehung der Gabel 3 ist erreichbar durch übliches Bewegen des die Lenkrolle 1 aufweisenden Transportgerätes, beispielsweise im Zuge einer Rangierbewegung. Mit Fortfall der die Gabel 3 mit dem Laufrad 4 auslenkenden Kraft steuert die Gabel 3 mit dem Laufrad 4 selbsttätig wieder zurück in Richtung auf ihre Drehgrundstellung gemäß Figur 2, um so bockrollenartig den Geradeauslauf in vorteilhafter Weise zu unterstützen.

Bei der dargestellten ersten Ausführungsform mit einem Vorspannteil 8 und einem Ausrichtungsvorsprung 9 ergibt sich nur eine Drehgrundausrichtung gemäß der Darstellung in Figur 2. Entsprechend ergibt sich über die 360 Grad-Drehbeweglichkeit nur eine definierte, bis zu einem gewissen Kraftbeeinflussungsgrad selbsthaltende Grundausrichtung.

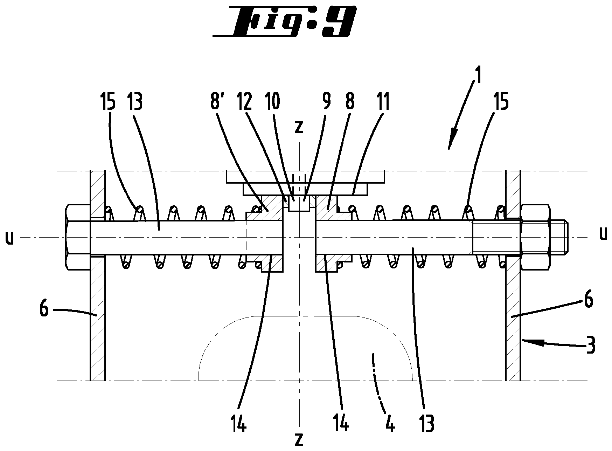

In den in den Figuren 5 bis 9 dargestellten Ausführungsformen ergeben sich über die 360 Grad-Drehbeweglichkeit der Gabel 3 mit dem Laufrad 4 zwei definierte, selbsthaltende Grundausrichtungen. Diese sind in Drehrichtung betrachtet um 180 Grad zueinander versetzt, so dass in beiden Drehgrundausrichtungen die geometrische Laufradachse y in dem dargestellten Ausführungsbeispiel gleichgerichtet und parallel zu einer kürzeren Längsrandkante des Halteteils 2 verläuft.

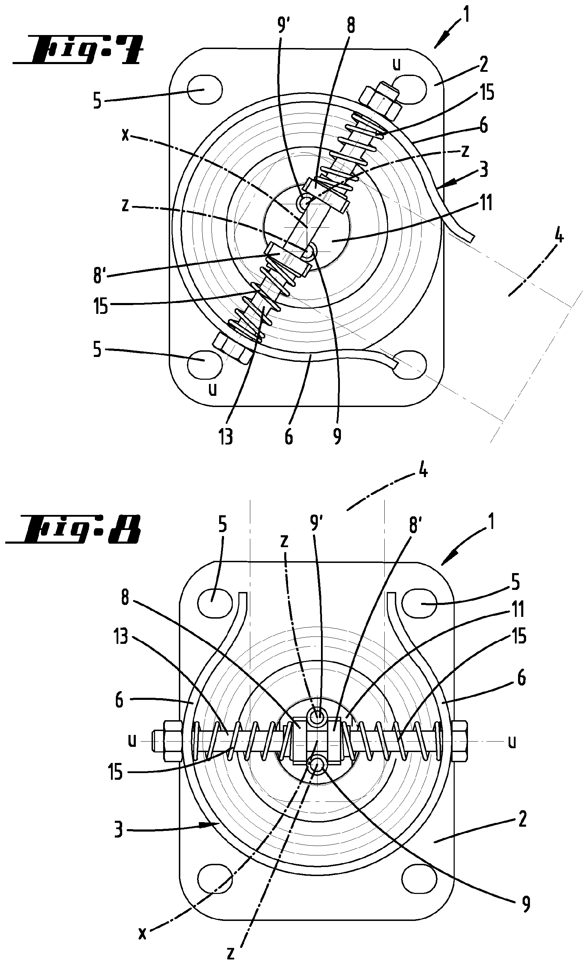

In der jeweiligen selbsthaltenden Drehgrundausrichtung (Figuren 5 und 8) sind die beiden Ausrichtungsvorsprünge 9 und 9' zwischen den aufeinander zuweisenden Stirnflächen der Vorspannteile 8 und 8' gefangen. Entsprechend stützen sich beide Vorspannteile 8 und 8' an beiden Ausrichtungsvorsprüngen 9, 9' ab. Eine die Zapfenlängsachsen z der Ausrichtungsvorsprünge 9 und 9' verbindende Linie schneidet in dieser Drehgrundausrichtung mit Bezug auf eine Projektion auf die Stirnplatte 11 die geometrische Bolzenlängsachse u des die Vorspannteile 8 und 8' tragenden Bolzens 13.

Diese Stellung der Vorspannteile 8 und 8' ist die Stellung mit der größten möglichen Entspannung der Zylinderdruckfedern 15, entsprechend die Stellung, in welcher die Vorspannteile 8 und 8' den geringsten Abstand zueinander aufweisen (mit Bezug auf die Verlagerungsrichtung der Vorspannteile).

Mit Drehverlagerung der Gabel 3 und des Laufrads 4 relativ zum Halteteil 2 werden beide Vorspannteile 8 und 8' bevorzugt gleichmäßig entgegen der Kraft der jeweiligen Zylinderdruckfeder 15 mit Bezug zu der Bolzenlängsachse u nach axial außen gedrängt. Dies zufolge steter Abstützung an dem jeweils zugewandten Ausrichtungsvorsprung 9 und 9'.

### Liste der Bezugszeichen

- 1: Lenkrolle
- 2: Halteteil
- 3: Gabel
- 4: Laufrad
- 5: Langloch
- 6: Gabelschenkel
- 7: Achse
- 8: Vorspannteil
- 8': Vorspannteil
- 9: Ausrichtungsvorsprung
- 9': Ausrichtungsvorsprung
- 10: Zapfen
- 11: Stirnplatte
- 12: Ring
- 13: Bolzen
- 14: Bohrung
- 15: Feder
- u: Bolzenlängsachse
- x: Drehachse
- y: Achse
- z: Zapfenlängsachse

## Patentansprüche

1. Lenkrolle (1) für insbesondere Transportgeräte, beispielsweise Paletten-Transportwagen, mit einem in einer Gabel (3) gelagerten Laufrad (4), wobei die Gabel (3) relativ zu einem feststehenden Halteteil (2) um eine Drehachse (x) drehbar ist, wobei weiter ein Vorspannteil (8, 8') vorgesehen ist, das zur Ausrichtung des Laufrades (4) relativ zu dem Halteteil (2) in einer Vorspannrichtung mit einem drehfest zu der Gabel (3) oder dem Halteteil (2) angeordneten Ausrichtungsvorsprung (9, 9') zusammenwirkt und das Vorspannteil (8, 8') mit einer, bezogen auf eine Projektion, senkrecht zu der Drehachse (x) gerichteten Vorspannkraft auf den Ausrichtungsvorsprung (9, 9') einwirkt, wobei die Einwirkung mit Ausnahme jedenfalls einer Drehstellung der Gabel (3) zu der Drehachse (x) exzentrisch ist, wobei das Vorspannteil (8, 8') eine auf einem Bolzen (13) geführte Feder (15) zur Übertragung einer Druckkraft auf den Ausrichtungsvorsprung (9, 9') aufweist, **dadurch gekennzeichnet, dass** auf dem einen Bolzen (13) ein oder zwei Vorspannteile (8, 8') verschiebbar angeordnet sind, die im Falle von zwei Vorspannteilen jeweils über eine Zylinderdruckfeder (15) in Richtung auf die zentrale Drehachse (x) federbelastet sind, wobei zwei Ausrichtungsvorsprünge (9, 9') vorgesehen sind, und jedes Vorspannteil (8, 8') unabhängig von der Drehstellung der Gabel relativ zu dem Halteteil (2) stets zumindest an einem Ausrichtungsvorsprung (9, 9') anliegt und dass bei einer Ausführung mit nur einem Vorspannteil und einem Ausrichtungsvorsprung (9) die Zapfenlängsachse (Z) eines Ausrichtungsvorsprunges (9) die geometrische Bolzenlängsachse (u) des das Vorspannteil (8) tragenden Bolzens (13) in einer bevorzugten und definierten Drehgrundausrichtung der Gabel (3) schneidet.

2. Lenkrolle (1) nach einem der vorhergehenden Ansprüche, **dadurch gekennzeichnet, dass** bei zwei Ausrichtungsvorsprüngen (9, 9') die Einwirkung mit Ausnahme von zwei Drehstellungen der Gabel (3) zu der Drehachse (x) exzentrisch ist.

3. Lenkrolle (1) nach einem der vorhergehenden Ansprüche, **dadurch gekennzeichnet, dass** der Ausrichtungsvorsprung (9, 9') einen um eine Zapfenlängsachse (z) drehbaren Ring (12) aufweist, wobei eine Ringaußenfläche mit dem Vorspannteil (8, 8') zusammenwirkt.

4. Lenkrolle (1) nach einem der vorhergehenden Ansprüche, **dadurch gekennzeichnet, dass** die Gabel (3) von dem quer zu der Drehachse (x) verlaufenden Bolzen (13) durchsetzt ist.

5. Lenkrolle (1) nach einem der vorhergehenden Ansprüche, **dadurch gekennzeichnet, dass** das Vorspannteil (8, 8') ein Hartkunststoffteil ist.

6. Lenkrolle (1) nach einem der vorhergehenden Ansprüche, **dadurch gekennzeichnet, dass** der Ausrichtungsvorsprung (9, 9') ein Metallteil ist.

7. Lenkrolle (1) nach einem der vorhergehenden Ansprüche, **dadurch gekennzeichnet ist, dass** das Vorspannteil (8, 8') nur zur Übertragung einer Druckkraft auf den Ausrichtungsvorsprung (9, 9') ausgelegt ist.

## Claims

1. Castor (1) for transport devices in particular, for example pallet transport trolleys, having a wheel (4) mounted in a fork (3), the fork (3) being rotatable about an axis of rotation (x) relative to a stationary holding part (2), a pretensioning part (8, 8') also being provided which, in order to align the wheel (4) relative to the holding part (2) in a pretensioning direction, interacts with an alignment protrusion (9, 9') arranged non-rotatably with respect to the fork (3) or the holding part (2), and the pretensioning part (8, 8') acting on the alignment protrusion (9, 9') with a pretensioning force directed perpendicularly to the axis of rotation (x), based on a projection, the action, with the exception of a rotational position of the fork (3), being eccentric with respect to the axis of rotation (x), the pretensioning part (8, 8') having a spring (15) guided on a bolt (13) for transmitting a compressive force to the alignment protrusion (9, 9'), **characterised in that** one or two pretensioning parts (8, 8') are arranged displaceably on one bolt (13), which pretensioning parts, in the case of two pretensioning parts, are each spring-loaded in the direction of the central axis of rotation (x) by means of a cylinder compression spring (15), two alignment protrusions (9, 9') being provided, and each pretensioning part (8, 8'), regardless of the rotational position of the fork relative to the holding part (2), always resting against at least one alignment protrusion (9, 9'), and **in that**, in an embodiment having only one pretensioning part and one alignment protrusion (9), the pin longitudinal axis (Z) of an alignment protrusion (9) intersects the geometrical bolt longitudinal axis (u) of the bolt (13) carrying the pretensioning part (8) in a preferred and defined basic rotational orientation of the fork (3).

2. Castor (1) according to one of the preceding claims, **characterised in that** in the case of two alignment protrusions (9, 9'), the action, with the exception of two rotational positions of the fork (3), is eccentric with respect to the axis of rotation (x).

3. Castor (1) according to either of the preceding claims, **characterised in that** the alignment protrusion (9, 9') has a ring (12) which is rotatable about a pin longitudinal axis (z), an outer ring surface interacting with the pretensioning part (8, 8').

4. Castor (1) according to any of the preceding claims, **characterised in that** the fork (3) is penetrated by the bolt (13) extending transversely to the axis of rotation (x).

5. Castor (1) according to any of the preceding claims, **characterised in that** the pretensioning part (8, 8') is a hard plastics part.

6. Castor (1) according to any of the preceding claims, **characterised in that** the alignment protrusion (9, 9') is a metal part.

7. Castor (1) according to any of the preceding claims, **characterised in that** the pretensioning part (8, 8') is designed only to transmit a compressive force to the alignment protrusion (9, 9').

## Revendications

1. Roulette pivotante (1) pour en particulier des dispositifs de transport, par exemple des chariots de transport de palettes, avec une roue de roulement (4) montée dans une fourche (3), dans laquelle la fourche (3) peut tourner autour d'un axe de rotation (x) par rapport à une pièce de maintien fixe (2), dans laquelle en outre est prévue une pièce de précontrainte (8, 8') qui coopère avec une saillie d'alignement (9, 9') agencée de manière fixe en rotation par rapport à la fourche (3) ou à la pièce de maintien (2) pour l'alignement de la roue de roulement (4) par rapport à la pièce de maintien (2) dans une direction de précontrainte, et la pièce de précontrainte (8, 8') agit sur la saillie d'alignement (9, 9') avec une force de précontrainte dirigée, en référence à une projection, perpendiculairement à l'axe de rotation (x), l'action étant excentrée par rapport à l'axe de rotation (x) à l'exception d'au moins une position de rotation de la fourche (3), dans laquelle la pièce de précontrainte (8, 8') présente un ressort (15) guidé sur un axe (13) pour transmettre une force de pression à la saillie d'alignement (9, 9'), **caractérisé en ce qu'**une ou deux pièces de précontrainte (8, 8') sont agencées de manière coulissante sur l'axe (13) lesquelles, dans le cas de deux pièces de précontrainte, sont chacune sollicitées élastiquement dans la direction de l'axe central de rotation (x) par un ressort de pression cylindrique (15), deux saillies d'alignement (9, 9') étant prévues et chaque pièce de précontrainte (8, 8) étant en appui constamment sur au moins une saillie d'alignement (9, 9') indépendamment de la position de rotation de la fourche par rapport à la pièce de maintien (2), et **en ce que**, dans une mise en œuvre avec seulement une pièce de précontrainte et une saillie d'alignement (9), l'axe longitudinal de broche (Z) d'une saillie d'alignement (9) coupe l'axe longitudinal géométrique (u) de l'axe (13) portant la pièce de précontrainte (8) dans une orientation de rotation de base préférée et définie de la fourche (3).

2. Roulette pivotante (1) selon l'une des revendications précédentes, **caractérisée en ce que**, dans le cas de deux saillies d'alignement (9, 9'), l'action est excentrée par rapport à l'axe de rotation (x) sauf pour deux positions de rotation de la fourche (3).

3. Roulette pivotante (1) selon l'une quelconque des revendications précédentes, **caractérisée en ce que** la saillie d'alignement (9, 9') comprend une bague (12) pouvant tourner autour d'un axe longitudinal de broche (z), une surface extérieure de la bague coopérant avec la partie de précontrainte (8, 8').

4. Roulette pivotante (1) selon l'une des revendications précédentes, **caractérisée en ce que** la fourche (3) est traversée par l'axe (13) s'étendant transversalement à l'axe de rotation (x).

5. Roulette pivotante (1) selon l'une des revendications précédentes, **caractérisée en ce que** la partie de précontrainte (8, 8') est une pièce en matière plastique dure.

6. Roulette pivotante (1) selon l'une des revendications précédentes, **caractérisée en ce que** la saillie d'alignement (9, 9') est une pièce en métal.

7. Roulette pivotante (1) selon l'une des revendications précédentes, **caractérisée en ce que** la partie de précontrainte (8, 8) est conçue uniquement pour transmettre une force de pression sur la saillie d'alignement (9, 9).
